# EUROPÄISCHE PATENTANMELDUNG

(11) **EP 1 610 122 A1**
(43) Veröffentlichungstag der Anmeldung: **28.12.2005**
(21) Anmeldenummer: 04012922.3
(22) Anmeldetag: 01.06.2004
(51) Int. Cl.: G01N 29/20, G01N 29/22, G01N 29/28

(54) **Verfahren und Vorrichtung zur Ermittlung von Defekten in einer Turbinenschaufel mittels eines Ultraschall-Gruppenstrahlers**

(71) Anmelder: SIEMENS AKTIENGESELLSCHAFT, 80333 München (DE)
(72) Erfinder: Clossen-von Lanken Schulz, Michael, 47608 Geldern (DE); Opheys, Michael, Dr., 41334 Nettetal (DE)

(57) **Zusammenfassung**

Die Erfindung betrifft ein Verfahren und eine Mess- und Auswerteeinrichtung (21) zur Ermittlung von Defekten in einer Turbinenschaufel (7) sowie eine Fixiervorrichtung (14) zum Fixieren eines Prüfkopfes (18) an eine Turbinenschaufeloberfläche (13).

## Beschreibung

Die Erfindung betrifft ein Verfahren und eine Mess- und Auswerteeinrichtung zur Ermittlung von Defekten in einer Turbinenschaufel sowie eine Fixiervorrichtung zum Fixieren eines Prüfkopfes an eine Turbinenschaufeloberfläche.

Es ist allgemein bekannt, dass sich Defekte, z. B. in Form von Rissen, negativ auf die Festigkeit eines Bauteiles und damit auch die Sicherheit des Bauteiles auswirken. Solche Risse in der Oberfläche von Bauteilen können unter bestimmten Bedingungen wachsen. Dies trifft insbesondere bei Bauteilen wie z. B. Wellen, Turbinenschaufeln oder insbesondere Turbinenschaufelfüße zu, die neben einer statischen Belastung auch eine dynamische Belastung erfahren.

Verfahren zur Ermittlung von Defekten in Bauteilen sind in der DE 44 21 277 A1, DE 37 31 947 A1, WO 85/02464 A1 und der EP 0 337 700 A2 dargestellt. In den vorgenannten Dokumenten ist jeweils das zur Rissprüfung einer Oberfläche verwendete Farbeindringverfahren beschrieben. Hierbei wird auf die auf Risse zu prüfende Oberfläche ein Kontrastmittel aufgebracht, welches in vorhandene Risse eindringt. Das Kontrastmittel wird entfernt, die Oberfläche ggf. gereinigt und mit einer dünnen Schichtdicke ein Entwickler aufgebracht. Das in die Risse eingedrungene Kontrastmittel vermischt sich an den geometrischen Orten der Risse mit dem Entwickler, so dass aufgrund der dünnen Schicht des Entwicklers eine Sichtbarmachung der Risskontur erfolgt. Hierzu hat beispielsweise der Entwickler eine weiße und das Kontrastmittel eine rote Farbe oder das Kontrastmittel ist fluoreszierend.

Mit dem vorgenannten Verfahren ist es allerdings nicht möglich, die Füße von Turbinenschaufeln im eingebauten Zustand zu untersuchen.

Ein weiteres Verfahren zur Ermittlung von Defekten in Bauteilen ist in dem Buch "Werkstoffprüfung mit Ultraschall", J. + H. Krautkrämer, Springer-Verlag Berlin 1986, dargestellt. Insbesondere wird auf den Seiten 110 bis 111 beschrieben, wie ein Bauteilbereich unter Ausnutzung der Reflektion einer internen Fläche im Bauteil mit einem Sendeprüfkopf und einem Empfangsprüfkopf mittels Ultraschall untersucht werden kann. Bei einander gegenüberliegenden Außenseiten des Bauteils werden die Prüfköpfe einander gegenüberliegend auf diesen Außenseiten angeordnet. Der Sendeprüfkopf sendet das Ultraschallsignal der zu untersuchenden Fläche. Von dort wird es zum Empfangsprüfkopf reflektiert. Eine weitere Möglichkeit der Untersuchung ist das Tandemverfahren, bei dem beide Prüfköpfe hintereinander auf der gleichen Außenseite angeordnet sind. Hierbei wird eine Bauteilrückseite für eine zweite Reflektion ausgenutzt. Allerdings ist keines der beschriebenen Verfahren anwendbar, wenn nur eine zugängliche Außenseite des Bauteils vorhanden und es zudem keine geeignete Rückseite für die zusätzliche Reflektion nach dem Tandemverfahren gibt.

Ein weiteres Verfahren zur Ermittlung von Defekten in Bauteilen ist das sogenannte. Wirbelstromprüfverfahren. Dabei wird mit einer Erregerspule ein magnetisches Wechselfeld erzeugt, welches im zu prüfenden Material Wirbelströme hervorruft. Die Wirbelströme haben ihrerseits ein magnetisches Wechselfeld zur Folge, welches mit einer Detektorspule gemessen wird. Materialfehler in Form von Defekten haben einen charakteristischen Einfluss auf das gemessene Magnetfeld und können so detektiert werden.

Spannungskorrosionsrisse oder Defekte können bei einer dynamischen Belastung von rotierenden Teilen, wie z. B. einer Radscheibe auf einem Läufer einer Turbine zu fortschreitenden Schäden führen. Es ist daher notwendig, solche Bauteile in vorgegebenen Intervallen auf Defekte bzw. Spannungskorrosionsrisse hin zu überprüfen. Radscheiben bzw. Turbinenschaufelfüße oder Turbinenschaufeln, welche durch axiale oder radiale Stifte gegen Verdrehen gesichert auf einem Läufer angeordnet sind, können aus wirtschaftlichen Gründen nicht dadurch geprüft werden, dass der Läufer zerlegt wird bzw. die Turbinenschaufeln ausgebaut werden. Es ist daher angeraten, im Bereich der Schrumpfsitze und der angrenzenden Materialbereiche, insbesondere im Bereich der Nabeninnenoberfläche und der axialen Verdrehsicherungen bei Radscheiben, eine Ultraschallprüfung vorzunehmen. Die Geometrie der Radscheibe ist jedoch für eine Ultraschallprüfung mit Ultraschallprüfköpfen in dem nicht zugänglichen Nabeninnenbereich und in der Nähe von Verdrehsicherungen äußerst kompliziert. Die reproduzierbare Durchführung von Ultraschallprüfungen stößt außerdem noch auf weitere Probleme. Als Ankopplungsfläche für die Ultraschallprüfköpfe stehen nur die Seitenwangen der Radscheibe zur Verfügung. Häufig ist die Zugänglichkeit zu den Ankoppelflächen an der Radscheibe durch benachbarte Radscheiben eingeschränkt. Ein weiteres Problem besteht darin, dass die Schallwege zu geometriebedingten Reflektoren und zu eventuell vorhandenen, von der Nabenbohrung ausgehenden Rissen identisch sein können.

Aufgabe der Erfindung ist es daher ein Verfahren sowie eine Mess- und Auswerteeinrichtung und eine Fixiervorrichtung anzugeben, um Defekte von Turbinenschaufeln im eingebauten Zustand auf einem Läufer ermitteln zu können.

Die auf das Verfahren hin gerichtete Aufgabe wird gelöst durch ein Verfahren zur Ermittlung von Defekten in einer Turbinenschaufel, die durch folgende Schritte charakterisiert ist:
- Fixieren eines Prüfkopfes über der Turbinenschaufeloberfläche,
- Verbinden des Prüfkopfes mit einer Mess- und Auswerteeinrichtung,
- Messung durch eine Gruppenstrahler (Phased-Array)-Ultraschall-Prüfmethode, wobei ein Ultraschall-Impulssignal ausgesandt wird und ein von Reflektionen an Defekten oder Formgrenzen herrührendes Echosignal empfangen wird,
- Vergleich des Echosignals mit einem Referenzechosignal,
- Ermittlung von Defekten durch Auswertung von Unterschieden zwischen dem Echosignal und dem Referenzechosignal.

Die auf die Mess- und Auswerteeinrichtung hin gerichtete Aufgabe wird gelöst durch eine Mess- und Auswerteeinrichtung zur Ermittlung von Defekten in Turbinenschaufeln, umfassend
- eine Fixiervorrichtung zum Fixieren eines Prüfkopfes auf die Turbinenschaufeloberfläche,
- einer mit dem Prüfkopf verbundenen Ultraschall-Impulssignalquelle,
- einem Ultraschall-Echosignalempfänger und
- einer Darstellungseinrichtung zum Darstellen des Echosignals.

Die auf die Fixiervorrichtung hin gerichtete Aufgabe wird gelöst durch eine Fixiervorrichtung zum Fixieren eines Prüfkopfes an eine Turbinenschaufeloberfläche, wobei die Fixiervorrichtung aus einem leicht verformbaren Material hergestellt ist.

Der Vorteil der Erfindung ist unter anderem darin zu sehen, dass Defekte in Turbinenschaufeln im eingebauten Zustand ermittelt werden können. Ein zeitintensiver und daher kostspieliger Aus- und Einbau der Turbinenschaufeln entfällt.

Durch den vorgeschlagenen Einsatz von Prüfköpfen, die als Gruppenstrahler (Phased-Arrays) ausgebildet sind, ist es möglich, die Richtung des abgestrahlten Ultraschalls bzw. die Richtung, aus der der Ultraschall empfangen werden kann, zu verändern.

Durch dieses Verfahren ist es zum Beispiel möglich, sichere und schnelle Analysen in einem Fehlererwartungsbereich von Turbinenschaufelfüßen durchzuführen. Risse entstehen durch hohe mechanische, thermische oder korrosive Belastung. Dabei entstehen Ermüdungs- bzw. Schwingungsrisse. Durch das vorgestellte Verfahren ist eine frühe Erkennung und anschließende Überwachung entstandener Fehler möglich.

Das vorgestellte Verfahren liefert reproduzierbare Prüfergebnisse und ist für den praktischen Einsatz geeignet.

In einer vorteilhaften Ausgestaltung der Erfindung wird als Gruppenstrahler-(Phased-Array)-Ultraschall-Prüfmethode eine Impuls-Echo-Methode verwendet.

Mit der Impuls-Echo-Methode ist es möglich, sehr präzise Defekte zu ermitteln.

Die Erfindung geht davon aus, dass der Prüfkopf über der Turbinenschaufeloberfläche fixiert ist. Der Prüfkopf wird hierbei derart fixiert, dass nach einem Lösen des Prüfkopfes und einem anschließenden Wiederanbringen des Prüfkopfes exakt dieselbe Stelle eingenommen wird wie vor dem Abbau des Prüfkopfes. Die Positionierung des Prüfkopfes muss sehr genau durchgeführt werden. Nur so sind reproduzierbare Messungen möglich. Während einer Messung wird von dem Prüfkopf ein Ultraschall-Impulssignal ausgesandt und ein von Reflektionen an Defekten oder Formgrenzen herrührendes Echosignal empfangen.

Durch einen Vergleich des Echosignals mit einem Referenzechosignal können Defekte ermittelt werden, indem Unterschiede zwischen dem Echosignal und dem Referenzechosignal ausgewertet werden.

Vorteilhafterweise werden die Referenzechosignale aus Modellrechnungen oder aus Messungen an einer im wesentlichen defektfreien Turbinenschaufel ermittelt.

Durch den Einsatz eines als ein Phased-Array ausgebildeten Prüfkopfes ist es möglich, das Ultraschall-Impulssignal in verschiedene Richtungen auszusenden. Dadurch wird eine Möglichkeit geschaffen, über einen größeren Winkelbereich sogenannte Winkelscans durchzuführen. Somit kann während eines Messvorganges ein größerer Bereich der Turbinenschaufel untersucht werden.

Vorteilhafterweise liegt der Winkelbereich zwischen -45° bis +45° gegenüber einer Haupteinstrahlrichtung, wobei die Haupteinstrahlrichtung im wesentlichen senkrecht zur Turbinenschaufeloberfläche am Ort des Prüfkopfes verläuft.

Die Erfindung geht davon aus, dass zum Fixieren eines Prüfkopfes an eine Turbinenschaufel-Oberfläche eine Fixiervorrichtung eingesetzt wird. Mit dieser Fixiervorrichtung ist es möglich, einen Prüfkopf aufzunehmen und diesen Prüfkopf auf die Turbinenschaufel-Oberfläche sehr exakt zu positionieren. Selbst nach einem Abbau der Fixiervorrichtung und einem anschließenden Anbau auf die Turbinenschaufeloberfläche nimmt der Prüfkopf exakt dieselbe Position ein wie vor dem Abbau der Fixiervorrichtung.

Die Fixiervorrichtung wird hierbei aus einem leicht verformbaren Material hergestellt. Dies bietet den Vorteil, dass die Fixiervorrichtung schnell und kostengünstig hergestellt werden kann.

Vorteilhafterweise ist die Fixiervorrichtung aus Plastik, Holz oder Gummi hergestellt.

In einer vorteilhaften Ausbildung der Erfindung wird die Fixiervorrichtung derart hergestellt, dass die der Turbinenschaufeloberfläche zugewandte äußere geometrische Form der Fixiervorrichtung an die äußere geometrische Form der Turbinenschaufel-Oberfläche angepasst ist und die Fixiervorrichtung eine Ausnehmung zum Aufnehmen des Prüfkopfes aufweist.

Durch die Anpassung der Fixiervorrichtung an die äußere Form der Turbinenschaufeloberfläche, was quasi zu einer Negativ-Abdruckform führt, ist es möglich, den Prüfkopf immer an dieselbe Stelle der zu prüfenden Stelle des Turbinenschaufelfußes anzubringen.

Zweckmäßigerweise ist die Fixiervorrichtung hierbei leicht montierbar ausgeführt.

Zur besseren Montage und zur guten Übertragung des Ultraschalls wird eine leicht verformbare Ultraschallübertragungspaste zwischen der Fixiervorrichtung und der Turbinenschaufeloberfläche angebracht.

Ausführungsbeispiele der Erfindung werden anhand der Figuren dargestellt. In den Figuren werden funktionsähnliche Komponenten mit denselben Bezugszeichen bezeichnet.

Dabei zeigen
Figur 1 eine Schnittdarstellung durch eine Dampfturbine,
Figur 2 eine perspektivische Darstellung einer Turbinenschaufel,
Figur 3 eine perspektivische Darstellung eines Teiles einer Turbinenschaufel mit einer Fixiervorrichtung,
Figur 4 eine weitere perspektivische Darstellung eines Teiles einer Turbinenschaufel mit einer Fixiervorrichtung,
Figur 5 eine perspektivische Darstellung eines Teiles eines Rotors und einer Mess- und Auswerteeinrichtung,
Figur 6 eine Darstellung einer Messaufnahme mit Darstellung eines Defektes,
Figur 7 eine Darstellung einer Messaufnahme einer im wesentlichen defektfreien Referenzturbinenschaufel.

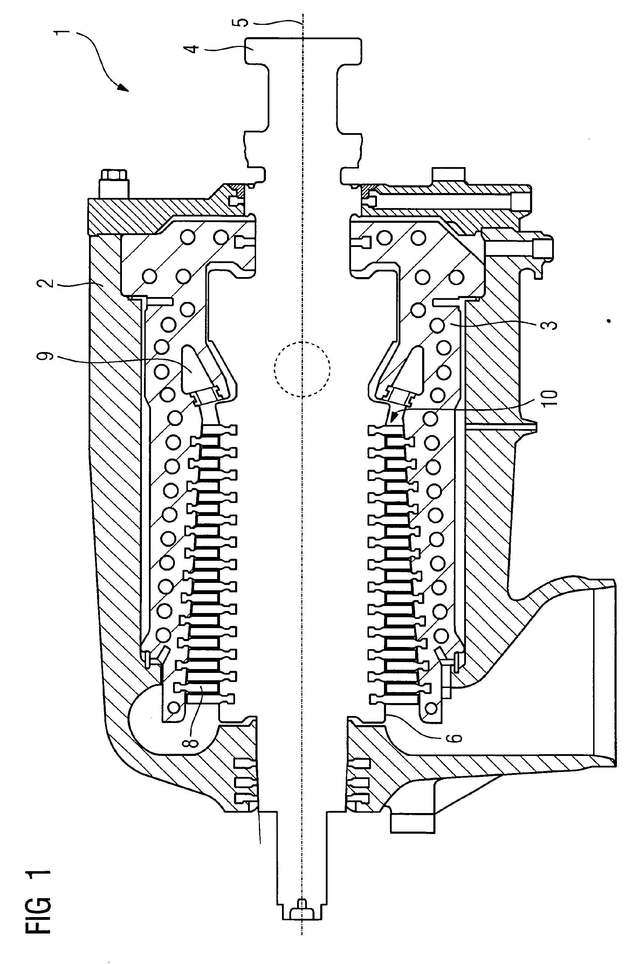

In der Figur 1 ist ein Schnitt durch eine Dampfturbine 1 dargestellt. Die Dampfturbine 1 weist ein Außengehäuse 2 und ein Innengehäuse 3 auf. Eine Welle 4 ist um eine Rotationsachse 5 drehbar gelagert. Auf der Wellenoberfläche 6 sind in Umfangsrichtung Turbinenschaufeln 7 angeordnet. In dem Innengehäuse 3 sind Turbinenleitschaufeln 8 angeordnet. Im Betrieb strömt Dampf in einen Einströmbereich 9 und entspannt sich beim Durchgang durch einen Strömungskanal 10. Die Welle 4 wird hierbei in eine Rotation versetzt. Ein nicht näher dargestellter Läufer eines Generators kann hierdurch in Drehung versetzt werden.

In Revisionsfällen oder in Schadensfällen wird in der Regel das Außengehäuse 2 der Dampfturbine 1 geöffnet, damit der Zugang zu den einzelnen Turbinenschaufeln 7 auf der Welle 4 ermöglicht wird.

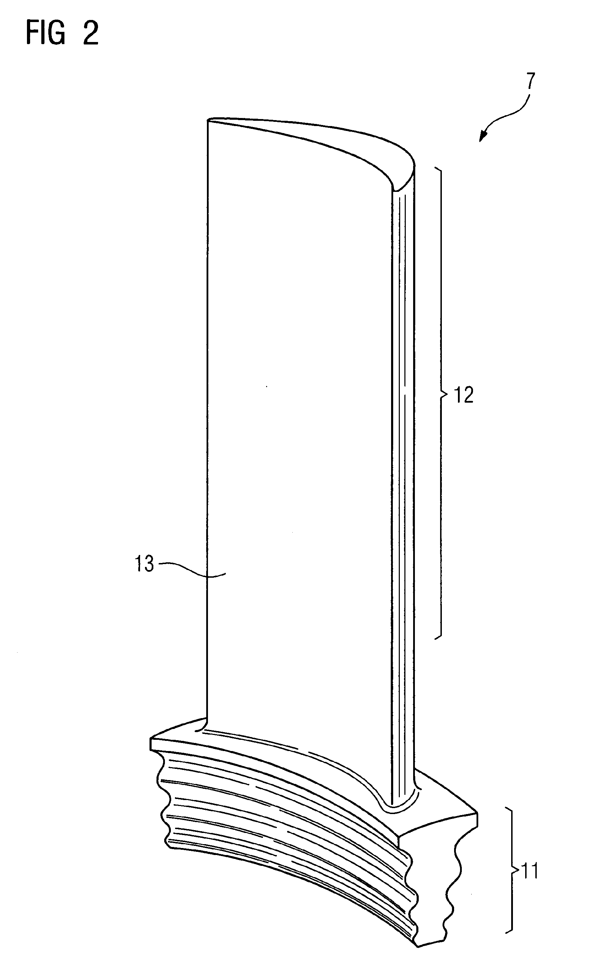

In der Figur 2 ist in perspektivischer Darstellung eine Turbinenschaufel 7 zu sehen. Die Turbinenschaufel 7 weist einen Turbinenschaufelfuß 11 auf. Der in Figur 2 dargestellte Turbinenschaufelfuß 11 ist als sogenannter Tannenbaumfuß ausgebildet. Im Betrieb der Dampfturbine 1 treten aufgrund der hohen Drehzahlen der Welle 4 hohe Fliehkräfte auf. Die hohen Fliehkräfte können zu Defekten in Form von Rissen in den Turbinenschaufelfüßen 11 oder sogar in einem Turbinenschaufeloberteil 12 führen.

Kleine Defekte in Form von Rissen sind in den meisten Fällen mit bloßem Auge nicht zu erkennen. Die Risse können sowohl auf einer Turbinenschaufeloberfläche 13 als auch im Inneren der Turbineschaufel 7 vorkommen.

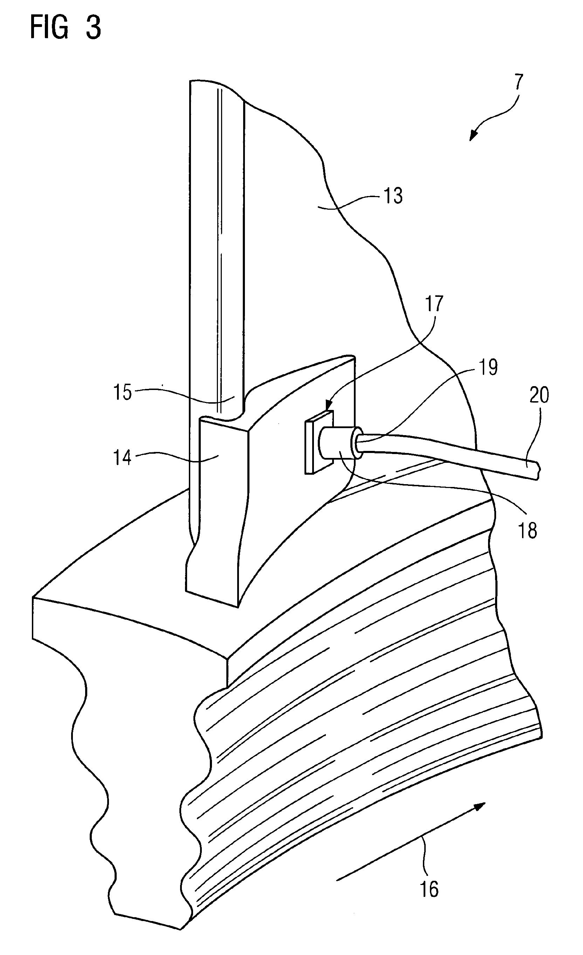

In der Figur 3 ist eine perspektivische Darstellung eines Teils der Turbinenschaufel 7 und einer Fixiervorrichtung 14 zu sehen. Die Fixiervorrichtung 14 wird aus einem leicht verformbaren Material hergestellt. Die Fixiervorrichtung kann aus Plastik, Holz oder Gummi hergestellt werden. Die Fixiervorrichtung kann auch aus einem Vergussmaterial, das nach einem Aushärten starr wird, hergestellt werden.

Die Fixiervorrichtung 14 wird derart hergestellt, dass die der Turbinenschaufeloberfläche 13 zugewandte äußere geometrische Form der Fixiervorrichtung 14 an die äußere geometrische Form eines Abschnitts der Turbinenschaufeloberfläche 13 angepasst ist. Wie man der Figur 3 entnehmen kann, ist die Fixiervorrichtung 14 an einer Turbinenschaufelkante 15 abgestützt. Ein Verschieben der Fixiervorrichtung in einer Verschiebungsrichtung 16 ist dadurch nicht möglich. Wenn die Fixiervorrichtung 14 von der Turbinenschaufel 7 entfernt wird, kann sie wieder an exakt dieselbe Stelle angebracht werden.

Die Fixiervorrichtung 14 weist eine Ausnehmung 17 auf, in der ein Prüfkopf 18 derart angeordnet ist, dass ein Durchlass für die Ultraschallstrahlen entsteht. In die Ausnehmung 17 wird der Prüfkopf derart eingebaut, dass der Prüfkopf zum einen mechanisch fest in der Fixiervorrichtung klemmt oder in sonst einer Möglichkeit gehaltert wird und zum anderen möglichst nah auf die Turbinenschaufeloberfläche 13 aufliegt, um die Übertragung der Ultraschallwellen möglichst störungsfrei erfolgt. Der Prüfkopf 18 weist einen Prüfkopfausgang 19 auf, der über eine Leitung 20 mit einer Mess- und Auswerteeinrichtung 21 verbunden ist. Die Fixiervorrichtung 14 wird mittels einer leicht verformbaren Ultraschallübertragungspaste an die Turbinenschaufeloberfläche 13 anmontiert.

Als Ultraschallübertragungspaste kann z. B. ein Ultraschall-Gel oder Kleber eingesetzt werden.

Die Fixiervorrichtung 14 kann dadurch leicht montierbar ausgebildet sein.

Durch die äußere Form der Fixiervorrichtung 14 entfällt eine komplizierte Anmontage. Mit der Ultraschallübertragungspaste ist es möglich, sehr kleine Luftspalte auszufüllen, wodurch ein Ultraschallsignal gut in ein Material eindringen kann. Anhand der Echosignale kann der Sitz der Fixiervorrichtung direkt überprüft werden.

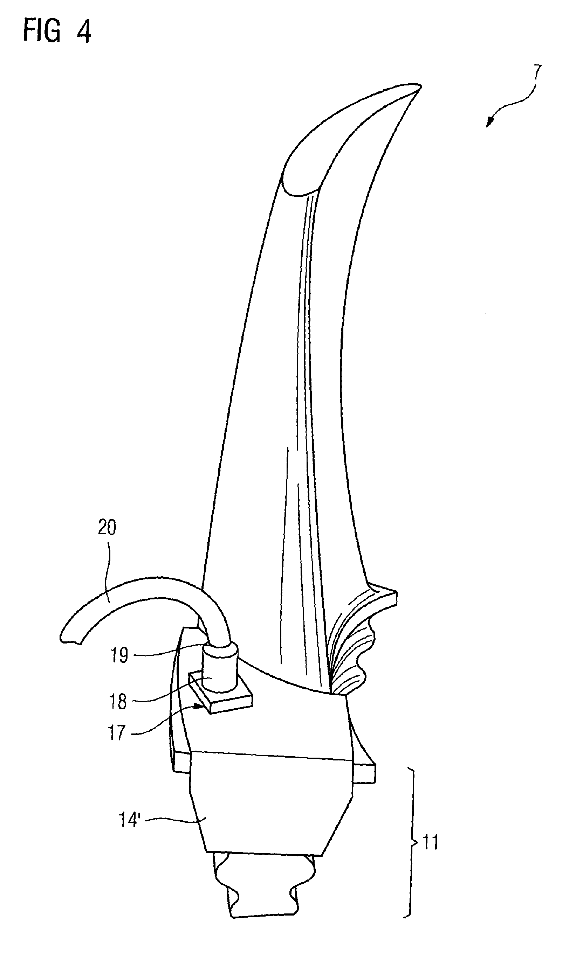

In der Figur 4 ist eine weitere perspektivische Darstellung einer Turbinenschaufel 7 mit einer Fixiervorrichtung 14 zu sehen. Die äußere Form in der in Figur 4 dargestellten Fixiervorrichtung 14' ist nicht mit der äußeren Form der in der Figur 3 dargestellten Fixiervorrichtung 14 identisch. Wie in der Figurenbeschreibung zu Figur 3 dargestellt, ist der Habitus der Fixiervorrichtung 14 an einen bestimmten Abschnitt der Turbinenschaufeloberfläche 13 angepasst. Die Fixiervorrichtung 14, 14' bildet sozusagen eine negative Form des Abschnitts der Turbinenschaufeloberfläche 13 dar.

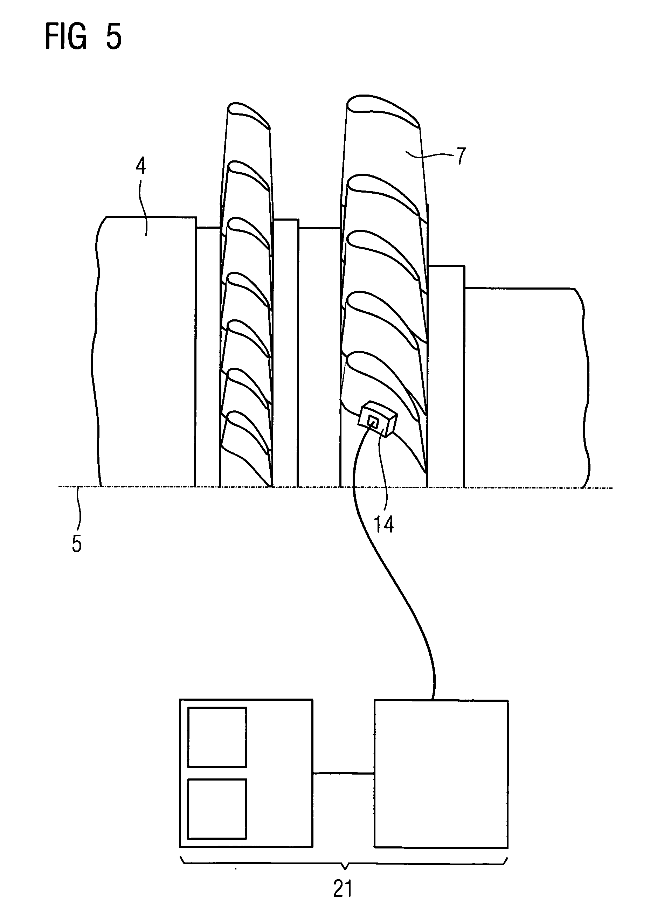

In der Figur 5 ist eine perspektivische Darstellung eines Teiles einer Welle 4 mit Turbinenschaufeln 7 zu sehen. Die an einer Stelle der Turbinenschaufel 7 angeordnete Fixiervorrichtung 14 ist über eine Leitung 20 an eine Mess- und Auswerteeinrichtung 21 verbunden. Der Prüfkopf 18 ist hierbei als Phased-Array oder Gruppenstrahlerprüfkopf ausgebildet.

Während einer Prüfung der Turbinenschaufel 7 wird vom Prüfkopf 18 eine Ultraschallwelle in eine Richtung ausgesandt. Die Ultraschallwelle wird an Defekten oder Formgrenzen reflektiert und als Echosignal vom Prüfkopf 18 erfasst. Das Echosignal wird an die Mess- und Auswerteeinrichtung 21 weitergeleitet. Es wird somit eine Impuls-Echo-Methode verwendet. In alternativen Ausführungsformen kann auch das sogenannte Pitch Catch-Verfahren, bei dem ein Prüfkopf ein Ultraschallsignal sendet und ein anderer Prüfkopf dieses Signal empfängt verwendet werden.

Durch den Einsatz eines als Phased-Array ausgebildeten Prüfkopfs ist es möglich, das Ultraschall-Impulssignal in verschiedene Richtungen auszusenden. Dadurch wird es möglich, über einen größeren Winkelbereich sogenannte Winkelscans durchzuführen. Der Winkelbereich liegt in bevorzugten Ausführungsformen zwischen -45° bis 45° gegenüber einer Haupteinstrahlrichtung, wobei die Haupteinstrahlrichtung im wesentlichen senkrecht zur Turbinenschaufeloberfläche am Ort des Prüfkopfes verläuft. In besonders bevorzugten Ausführungsformen liegt der Winkelbereich zwischen -85° bis 85° gegenüber der Haupteinstrahlrichtung.

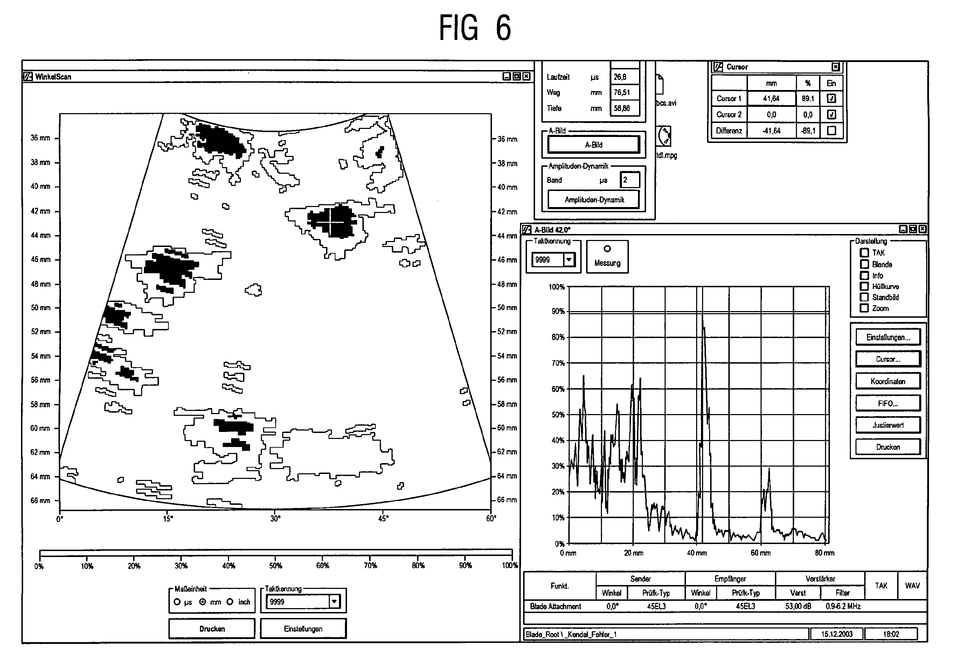

In der Figur 6 ist das Ergebnis einer solchen Messung dargestellt. Im linken Teil der Figur 6 ist ein sogenannter Winkelscan abgebildet. Die Ultraschallwelle ist hierbei vom Prüfkopf in einem Winkelbereich zwischen 0 und 80° ausgesandt worden. Die dunklen Flecken im Winkelscan geben Reflektionen an Formgrenzen oder Defekten an. Im rechten Teil der Figur 6 ist ein sogenanntes A-Bild zu sehen. Ein A-Bild zeigt sozusagen die ermittelte oder gemessene Intensität des Echosignals in Abhängigkeit der Laufzeit des Ultraschalls bzw. die daraus ermittelte Entfernung vom Prüfkopf zu einer Formgrenze oder einem Defekt.

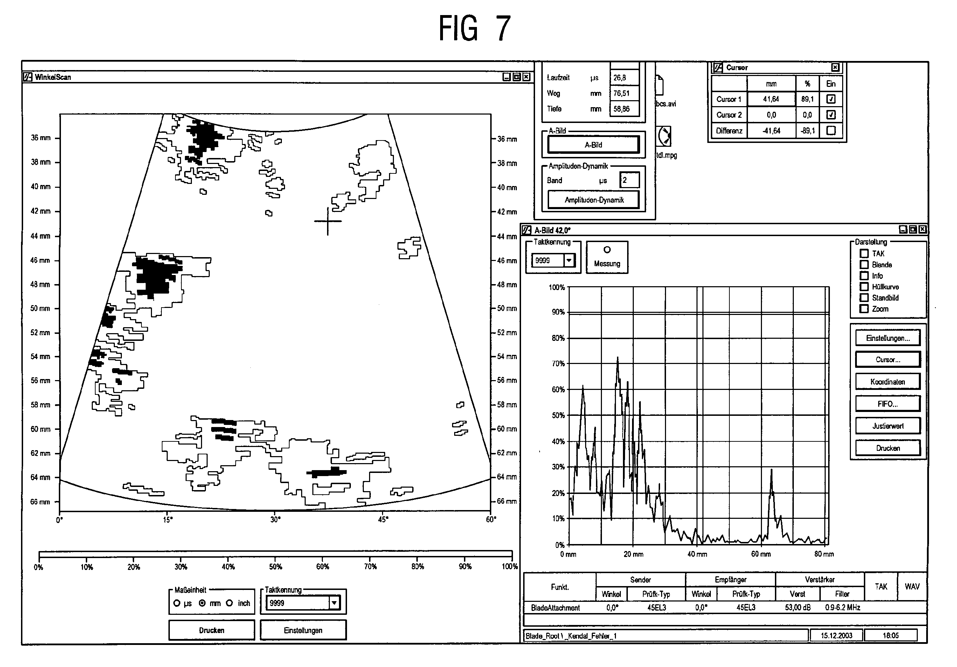

In der Figur 7 ist im linken Teil ein Winkelscan dargestellt, der mit demselben Prüfkopf 18 und derselben Fixiervorrichtung 14 aufgenommen wurde. Allerdings wurde diese Aufnahme an einer Turbinenschaufel 7 durchgeführt, die keine Defekte aufweist. Die dunklen Flecke im Winkelscan rühren lediglich von Reflektionen an Formgrenzen her. Der im linken Teil der Figur 7 dargestellt Winkelscan kann auch als Referenzechosignal bezeichnet werden. Zweckdienlicherweise sollte nicht nur an einer defektfreien Turbinenschaufel ein Referenzechosignal ermittelt werden, sondern an mehreren. Darüber hinaus ist es sinnvoll das Referenzechosignal aus Modellrechnungen zu ermitteln.

In Figur 7 ist erkennbar, dass an der mit dem Kreuz gekennzeichneten Stelle kein Echosignal empfangen wurde. Dem gegenüber ist in der Figur 6 an der mit dem Kreuz gekennzeichneten Stelle eindeutig ein Echosignal empfangen worden. Die restlichen dunklen Flecke in dem Winkelscan in Figur 6 sind mit den dunklen Flecken im Winkelscan der Figur 7 nahezu identisch. Der mit dem Kreuz gekennzeichnete dunkle Fleck rührt eindeutig von einem Defekt her. Dadurch ist es möglich, durch Auswertung der Unterschiede zwischen dem Echosignal und dem Referenzechosignal auf Defekte in der Turbinenschaufel 7 zu schließen. In alternativen Ausführungsformen kann die Auswertung durch eine Bilderkennungssoftware durchgeführt werden.

Als vorbereitende Maßnahme zur Positionierung des Prüfkopfes auf die Turbinenschaufeloberfläche 13 dienen Modellrechnungen. Mit Hilfe der Modellrechnungen wird, bei einer vorgegebenen Positionierung des Prüfkopfes 18, simuliert, wie ein zu erwartendes Echosignal aussieht.

Die Positionen und Einschallwinkel werden durch die vorgenannte Simulation ermittelt.

Für jeden zu untersuchenden Bereich der Turbinenschaufel 7 wird jeweils eine individuelle Fixiervorrichtung 14 angefertigt. Die Fixiervorrichtung 14 kann auch als Formschuh bezeichnet werden. Je nach Schaufeltyp kommen horizontal und/oder vertikal variierbare Phased-Array-Prüfköpfe zum Einsatz. Je nach Anwendung können Bereiche bis zu 35 mm um einen Fehlererwartungsbereich in nur einem Winkelscan erfasst und analysiert werden.

Die theoretischen Untersuchungen zur Ermittlung der Einschallparameter, Prüfkopfposition und Schallwinkel werden mit Hilfe einer 3D-Simulation durchgeführt. Die Festlegung der Parameter erfolgen iterativ, d.h. Prüfkopf-Einschallpositionen, Anstell- und Einschallwinkel werden variiert, bis die theoretisch günstigsten Auftreffbedingungen erreicht werden. Zur Visualisierung werden auf dem Computer entsprechende Simulationen durchgeführt. Durch das Verfahren ist es möglich, die Fehlerlage und die Eindeutigkeit des Defektes zu identifizieren. Die Eindeutigkeit des Defektes wird durch ein großes Signal zu Rauschverhältnis erreicht. Neben dem Einschallwinkel sind Schwingergröße und Prüffrequenz wichtige Prüfkopfparameter. Einschallwinkel und Schwingergröße werden maßgeblich von der Schaufelfußgeometrie bzw. der Größe der Ankoppelfläche bestimmt. Die Prüffrequenz ist so zu wählen, dass eine gute Fehlerauflösung bei großem Signalrauschabstand erreicht wird. Schwingergröße und Prüffrequenz müssen so aufeinander abgestimmt sein, dass mit Hilfe einer Schallbündeldivergenz Fehler in ungünstiger Einschallposition noch nachweisbar sind. Als veränderliche Parameter sollten gewählt werden: Einschallort, Einschallwinkel. Die Prüfköpfe 18 sind austauschbar in die Fixiervorrichtung 14 integriert.

Eine Ankoppelfläche auf dem Turbinenschaufelfuß 11 und dem zur Prüfung notwendigen Bereich der Turbinenschaufel 7 muss frei von Belägen (Korrosion, Verunreinigung usw.) und wasserabstoßenden Substanzen (Fett, Öl usw.) sein. Die Messdatenamplitude, Schalllaufzeit und -winkel werden von der Mess- und Auswerteeinrichtung 21 gespeichert. Die Daten können zur Nachbewertung wiederholt aufgerufen werden.

## Patentansprüche

1. Verfahren zur Ermittlung von Defekten in einer Turbinenschaufel (7), **gekennzeichnet durch** folgende Schritte,
- Fixieren eines Prüfkopfes (18) über der Turbinenschaufeloberfläche (13)
- Verbinden des Prüfkopfes mit einer Mess- und Auswerteeinrichtung (21)
- Messung **durch** eine Gruppenstrahler-(Phased-Array)-Ultraschall-Prüfmethode, wobei ein Ultraschall-Impulssignal ausgesandt wird und ein von Reflektionen an Defekten oder Formgrenzen herrührendes Echosignal empfangen wird
- Vergleich des Echosignals mit einem Referenzechosignal
- Ermittlung von Defekten **durch** Auswertung von Unterschieden zwischen dem Echosignal und dem Referenzechosignal.

2. Verfahren nach Anspruch 1,
**dadurch gekennzeichnet,**
**dass** als Gruppenstrahler-(Phased-Array)-Ultraschall-Prüfmethode eine Impuls-Echo-Methode verwendet wird.

3. Verfahren nach Anspruch 1 oder 2,
**dadurch gekennzeichnet,**
**dass** das Referenzechosignal aus Modellrechnungen ermittelt wird.

4. Verfahren nach Anspruch 1 oder 2,
**dadurch gekennzeichnet,**
**dass** das Referenzechosignal aus Messungen an einer im wesentlichen defektfreien Turbinenschaufel (7) ermittelt wird.

5. Verfahren nach einem der vorhergehenden Ansprüche,
**dadurch gekennzeichnet,**
**dass** der Prüfkopf (18) als ein Phased-Array-Prüfkopf ausgebildet wird, bei dem das Ultraschall-Impulssignal in verschiedene Richtungen ausgesandt werden kann.

6. Verfahren nach Anspruch 5,
**dadurch gekennzeichnet,**
**dass** das Ultraschall-Impulssignal in einem Winkelbereich zwischen -45° bis +45° gegenüber einer Haupteinstrahlrichtung ausgesandt werden kann, wobei die Haupteinstrahlrichtung im wesentlichen senkrecht zur Turbinenschaufeloberfläche (13) am Ort des Prüfkopfes (18) verläuft.

7. Mess- und Auswerteeinrichtung (21) zur Ermittlung von Defekten in Turbinenschaufeln (7), **gekennzeichnet durch**
- eine Fixiervorrichtung zum Fixieren eines Prüfkopfes (18) auf die Turbinenschaufeloberfläche (13),
- einer mit dem Prüfkopf (18) verbundenen Ultraschall-Impulssignalquelle,
- einem Ultraschall-Echosignalempfänger und
- einer Darstellungseinrichtung zum Darstellen des Echosignals.

8. Mess- und Auswerteeinrichtung (21) nach Anspruch 7,
**dadurch gekennzeichnet,**
**dass** der Prüfkopf (18) als ein Phased-Array-Prüfkopf ausgebildet ist.

9. Fixiervorrichtung (14) zum Fixieren eines Prüfkopfes (18) an eine Turbinenschaufeloberfläche (13),
**dadurch gekennzeichnet,**
**dass** die Fixiervorrichtung (14) aus einem leicht verformbaren Material hergestellt ist.

10. Fixiervorrichtung (14) nach Anspruch 9,
**dadurch gekennzeichnet,**
**dass** die Fixiervorrichtung (14) aus Plastik, Holz oder Gummi hergestellt ist.

11. Fixiervorrichtung (14) nach Anspruch 9 oder 10,
**dadurch gekennzeichnet,**
**dass** die der Turbinenschaufeloberfläche (13) zugewandte äußere geometrische Form der Fixiervorrichtung (14) an die äußere geometrische Form der Turbinenschaufeloberfläche (13) angepasst ist und die Fixiervorrichtung (14) eine Ausnehmung zum Aufnehmen des Prüfkopfes (18) aufweist.

12. Fixiervorrichtung (14) nach einem der Ansprüche 9 bis 11,
**dadurch gekennzeichnet,**
**dass** die Fixiervorrichtung (14) leicht montierbar ist.

13. Fixiervorrichtung (14) nach einem der Ansprüche 9 bis 11,
**dadurch gekennzeichnet,**
**dass** die Fixiervorrichtung (14) mittels einer leicht verformbaren Ultraschallübertragungspaste an die Turbinenschaufeloberfläche (13) anmontierbar ist.
